# EUROPEAN PATENT APPLICATION

(11) **EP 2 055 219 A2**
(43) Date of publication of application: **06.05.2009**
(21) Application number: 08103097.5
(22) Date of filing: 28.03.2008
(51) Int. Cl.: A47L 9/00, B60B 33/00

(54) **Wheel connection apparatus and cleaner having the same**

(30) Priority: 29.10.2007 KR 20070109205
(71) Applicant: Samsung Gwangju Electronics Co., Ltd., Gwangju-city (KR)
(72) Inventor: Oh, Hyeon-joon, Gwangju City (KR)
(74) Representative: Domenego, Bertrand

(57) **Abstract**

A wheel connection apparatus is disclosed. The wheel connection apparatus (140) includes a first axis rotatably connected to a wheel (130), a second axis rotatably connected to a cleaner body, and a frame (145) that supports the first axis (141) and the second axis (143) and prevents the first axis and the second axis from becoming separated from the cleaner body (120) and the wheel (130), the first axis and the second axis being arranged at a predetermined distance from each other.

## Description

### CROSS-REFERENCE TO RELATED APPLICATIONS

This application claims the benefit under 35 U.S.C. § 119 of Korean Patent Application No. 10-2007-0109205, filed on October 29, 2007, in the Korean Intellectual Property Office, the disclosure of which is incorporated herein by reference in its entirety.

### FIELD OF THE INVENTION

The present invention relates to a wheel connection apparatus, and more particularly to a wheel connection apparatus applied to cleaning apparatus.

### BACKGROUND OF THE INVENTION

Wheels may be classified as fixed wheels and free wheels. Fixed wheels are firmly attached to a cleaner body, whereas free wheels are movably attached to a cleaner body. If only fixed wheels are mounted on a cleaner body, it is difficult for the cleaner body to change direction. Therefore, a cleaner body typically has both fixed wheel and free wheels. However, while such a cleaner body can turn while moving over a surface, it cannot turn without moving.

Both fixed wheels and free wheels are widely used in cleaners. When a user uses the cleaner to clean a surface, the cleaner moves in various directions. That is, the cleaner may move forward or backward, or turn to the right or left. To support this type of movement, one free wheel is generally provided on the front part of the cleaner and two fixed wheels are provided on the rear part of the cleaner.

The center of gravity of a cleaner is generally located at the rear part of the cleaner body wherein the motor is mounted. When a user changes the direction of the cleaner abruptly while cleaning a surface, the fixed wheels do not rotate, i.e., roll, but rather are dragged. Accordingly, a user may have to use excessive force to drag the cleaner. Furthermore when the cleaner turns sharply, the cleaner body may lose its balance and tumble over because the fixed wheels do rotate.

### SUMMARY OF THE INVENTION

Accordingly, to solve at least the above problems and/or disadvantages and to provide at least the advantages described below, a non-limiting object of the present invention is to provide a wheel connection apparatus that includes a first axis rotatably connected to a wheel, a second axis rotatably connected to a cleaner body, and a frame that supports the first axis and the second axis and prevents the first axis and the second axis from becoming separated from the cleaner body and the wheel, the first axis and the second axis being arranged at a predetermined distance from each other.

The frame may include a protrusion that prevents the first axis and the second axis from becoming separated from the cleaner body and the wheel. The wheel connection apparatus may also include a first rotation restriction member disposed on a side of the wheel that restricts the angle of rotation of the wheel, and the first rotation restriction member may protrude from a part of the first axis. The wheel connection apparatus may also include a second rotation restriction member disposed on a side of the cleaner body that restricts the angle of rotation of the cleaner body, and the second rotation restriction member may protrude from a part of the second axis.

According to another exemplary aspect of the present invention, there is provided a cleaner including a cleaner body, a plurality of wheels which enable the cleaner body to move, and a plurality of wheel connection apparatuses that connect each respective wheel to the cleaner body. The cleaner body may turn about the wheel at a predetermined angle without the wheel rotating about its own axis. A shock absorbing member may be formed on a part of the cleaner body opposite the wheel, and the shock absorbing member may be made of rubber.

### BRIEF DESCRIPTION OF THE DRAWINGS

The above and other aspects of the present invention will be more apparent from the following detailed description of exemplary embodiments with reference to the accompanying drawings, in which:
FIG. 1 is an isometric view illustrating a vacuum cleaner according to an exemplary embodiment of the present invention;
FIGS. 2 and 3 are isometric views illustrating the assembly of a wheel connection apparatus connecting a wheel to a cleaner body according to an exemplary embodiment of the present invention;
FIG. 4 is a plan view illustrating a wheel connection apparatus connecting a wheel to a cleaner body according to an exemplary embodiment of the present invention;
FIG. 5 is a plan view illustrating the operation of a rotation restriction member of a cleaner body according to an exemplary embodiment of the present invention; and
FIG. 6A is a cross-sectional view illustrating the operation of a rotation restriction member of a wheel according to an exemplary embodiment of the present invention; and
FIG. 6B is a cross-sectional view illustrating the operation the operation of a rotation restriction member of a wheel according to an exemplary embodiment of the present invention.

### DETAILED DESCRIPTION OF EXEMPLARY EMBODIMENTS OF THE INVENTION

Reference will now be made in detail to non-limiting embodiments of the present invention by way of reference to the accompanying drawings, wherein like reference numerals refer to like parts, components and structures.

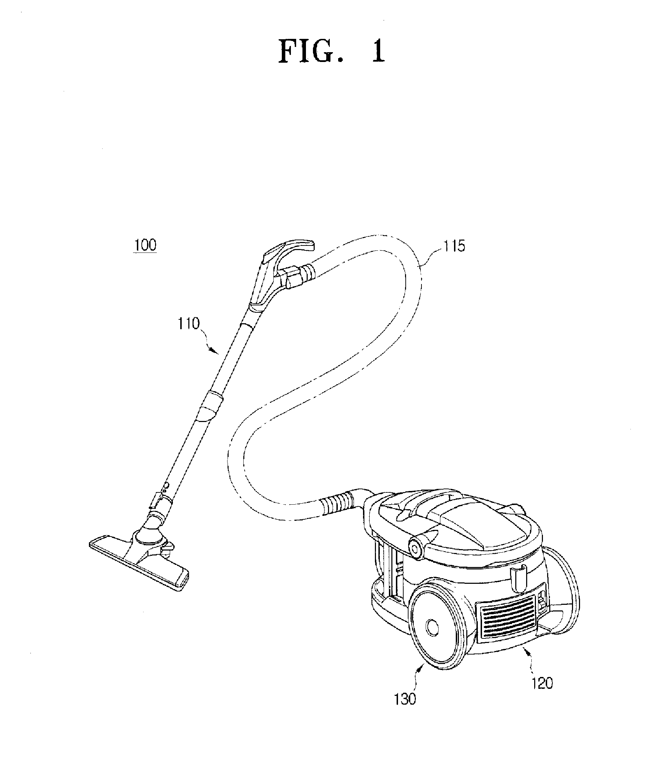

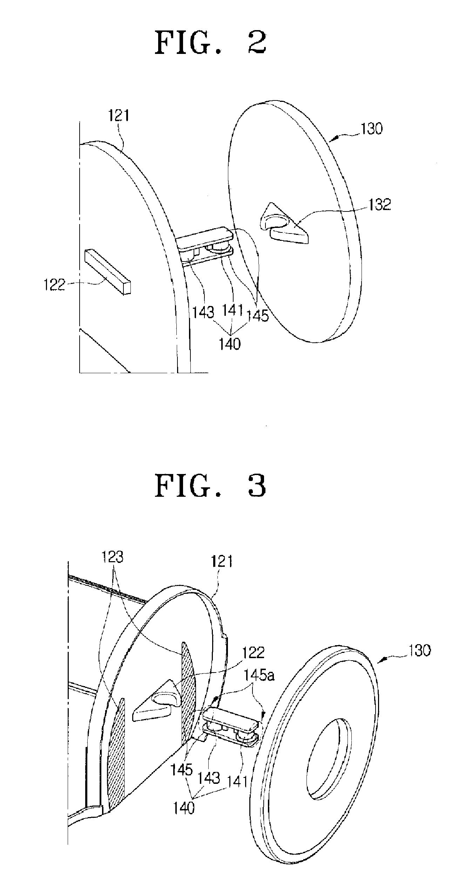

FIG. 1 is an isometric view illustrating a vacuum cleaner 100 according to an exemplary embodiment of the present invention. FIGS. 2 and 3 are isometric views illustrating a wheel connection apparatus connecting a wheel to a cleaner body. As illustrated in FIGS. 1 to 3, the vacuum cleaner 100 may comprise a suction nozzle assembly 110, a suction hose 115, a cleaner body 120, a wheel 130, and a wheel connection apparatus 140.

The suction nozzle assembly 110 is designed to be gripped by a user, and is used to draw dust and dirt into the vacuum cleaner 100. The dust and dirt drawn in by the suction nozzle assembly 110 through the suction hose 115 moves to a storage space in the cleaner body 120. The functions and constructions of the suction nozzle assembly 110 and the suction hose 115 may include those well-known to persons skilled in the art, and thus detailed descriptions are omitted. The cleaner body 120 may comprise a motor to generate a suction force, and a storage unit to collect the drawn-in dust.

Referring to FIGS. 2 and 3, the cleaner body 120 may comprise a housing 121, a first connection member 122 disposed to the cleaner body 120, and a shock absorbing member 123. The housing 121 protects internal components of the cleaner body 120. The first connection member 122 is configured to connect to a wheel connection apparatus 140.

The shock absorbing member 123 absorbs impacts between the cleaner body 120 and the wheel 130. Referring to FIG. 3, the shock absorbing member 123 is disposed in an area of the housing 121 with which the wheel 130 may collide. The shock absorbing member 123 may be made of rubber.

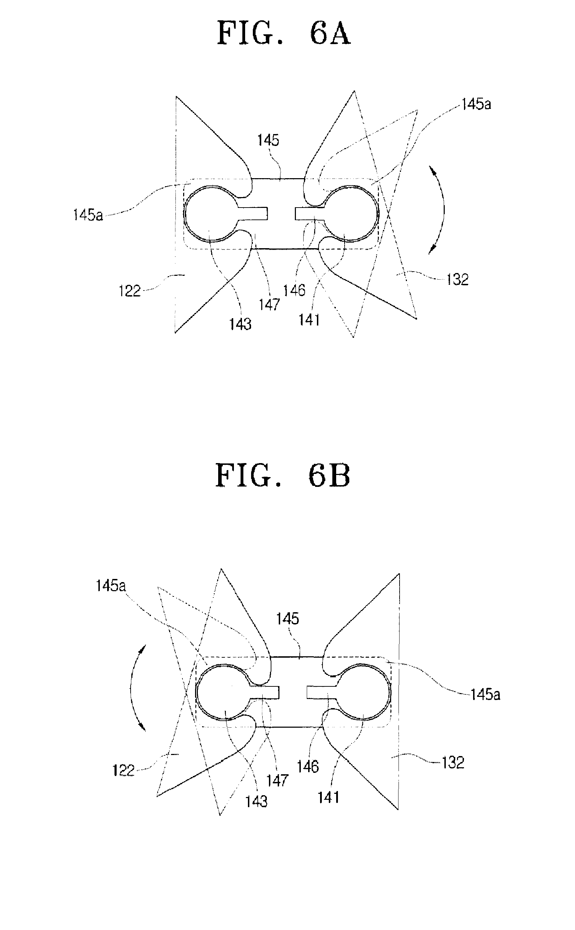

The wheel 130 comprises a second connection member 132, and enables the cleaner body 120 to be moved over a surface being cleaner by a user. The second connection member 132 configured to connect to the wheel connection apparatus 140. The wheel connection apparatus 140 connects the wheel 130 with the cleaner body 120 to facilitate the movement of the cleaner body 120, and may comprise a first axis 141, a second axis 143, a frame 145, a first rotation restriction member 146 (FIGS. 6A and 6B) disposed at the first axis 141, and a second rotation restriction member 147 (FIGS. 6A and 6B) disposed at the second axis 143.

The first axis 141 is rotatably connected to the second connection member 132. The second connection member 132 may have a shape complementary to the shape of the first axis 141 so that, for example, when the second connection member 132 has an opened part, the first axis 141 can be inserted into the opened part. The second connection member 132 may be made of elastic material in order to stretch to receive the first axis 141 when the first axis 141 is inserted into the opened part of the second connection member 132 and to return to its original position when the first axis 141 is completely inserted into the opened part of the second connection member 132, thereby holding the first axis 131 in place. The wheel 130 is capable of rotating about the first axis 141.

The second axis 143 is rotatably connected to the first connection member 122. The first connection member 122 may have a shape complementary to the shape to the second axis 143 so that, for example, when the first connection member 122 has an opened part, the second axis 143 can be inserted into the opened part. The first connection member 122 is made of elastic material in order to stretch to receive the second axis 143 when the second axis 143 is inserted into the opened part of the first connection member 122 and to return to its original position when the second axis 143 is completely inserted into the opened part of the first connection member 122, thereby holding the second axis 143 in place. The cleaner body 130 is capable of rotating about the second axis 143.

The first connection member 122 and the second connection member 132, as described above, are merely exemplary embodiments of the present invention. The first connection member 122 and the second connection member 132 may be embodied in various forms which enable the first axis 141 to be rotatably connected to the wheel 130 and the second axis 143 to be rotatably connected to the cleaner body 120. The second connection member 132 may be separably connected to the wheel 130 or may be formed with the wheel 130 as a single body 130.

The frame 145 supports the first axis 141 and second axis 143 and separates the first axis 141 from the second axis 143 by a predetermined distance. According to an exemplary embodiment of the present invention, the frame 145 is disposed at upper and lower surfaces of each of the first axis 141 and the second axis 143. Alternatively, the frame 145 may be disposed at middle parts of the first axis 141 and second axis 143. The frame 145 may have various structures to separate the first axis 141 and second axis 143 by a predetermined distance and to support the first axis 141 and second axis 143.

A protrusion 145a is formed on the frame 145 to prevent the first axis 141 and second axis 143 from becoming separated from the first connection member 122 and the second connection member 132, respectively. As illustrated in FIGS. 6A and 6B, the protrusion 145a extends beyond the first axis 141 and second axis 143 so as to interfere with the first connection member 122 or the second connection member 132 when the first or second axis 141 or 143 moves vertically in an axial direction along the first axis 141 and second axis 143. Accordingly, the first axis 141 and second axis 143 do not become separated from the first connection member 122 and the second connection member 132. The protrusion 145a, as described above, is merely an exemplary embodiment of the present invention and various structures may be employed to prevent the first axis 141 and second axis 143 from becoming separated from the first connection member 122 and the second connection member 132, respectively. The protrusion 145a may be directly formed on the first axis 141 and second axis 143 instead of the frame 145.

The first rotation restriction member 146 restricts the angle of movement of the wheel 130 about the first axis 141. The second rotation restriction member 147 restricts the angle of movement of the cleaner body 120 about the second axis 143. The first rotation restriction member 146 and the second rotation restriction member 147 are explained in more detail below.

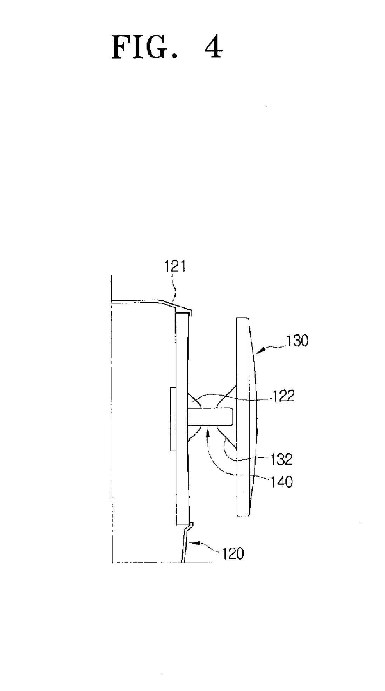

FIG. 4 is a plan view illustrating a wheel connection apparatus connecting a wheel to the cleaner body. The wheel connection apparatus 140 connects the wheel 130 to the cleaner body 120 so that the cleaner body 120 is capable of rotating about its original position at a predetermined angle without the wheels 130 rotating or dragging. The vacuum cleaner according to an exemplary embodiment of the present invention moves more freely than a conventional vacuum cleaner. When the cleaner body 120 changes its direction of movement, excessive force is not required, so a user can more easily change the direction of the cleaner body 120.

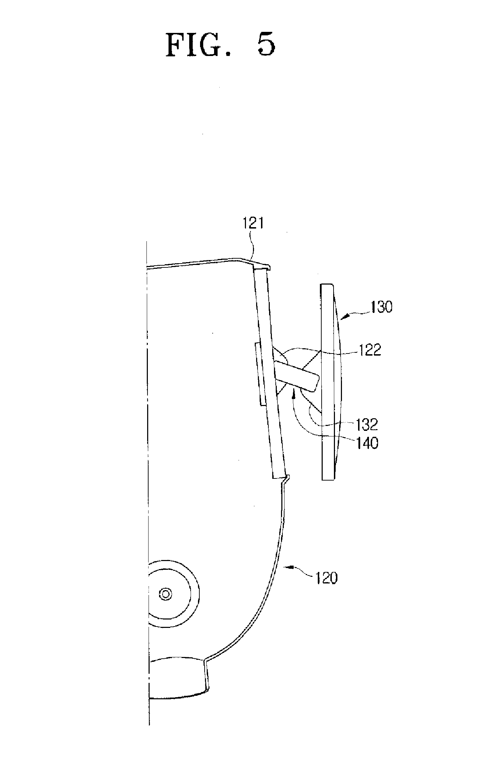

FIG. 5 is a plan view illustrating a situation in which a user rotates the cleaner body 120 to the right. As the cleaner body 120 turns about the second axis 143 of the wheel connection apparatus 140, and the wheel 130 rotates about the first axis 141 of the wheel connection apparatus 140, the cleaner body 120 rotates relative to the wheel 130 without the wheels rotating about their own axis, i.e., without the wheels rolling. This rotation of the cleaner body 120 is illustrated in FIG. 5 by way of comparison to the orientation of the cleaner body 120 and connection apparatus illustrated in FIG. 4.

While using the vacuum cleaner 100, a user may grip the suction nozzle assembly 110 and clean a wide area, and may thereby repeatedly put pressure on a connection part between the suction hose 115 and the cleaner body 120. As the cleaner body 120 of the present invention turns at a predetermined angel, the force applied to the connection part is mitigated. Accordingly, less force is required to change the direction of the cleaner body 120, and a user can more easily move the cleaner body 120.

If a user applies excessive force to move the cleaner body 120, the rotation of the cleaner body 120 may be uncontrolled such that the cleaner body 120 collides with a wheel 130. Accordingly, to absorb any resulting shock between the cleaner body 120 and the wheel 130, the shock absorbing member 123 may be formed on a predetermined part of the cleaner body 120 opposite the wheel 130 corresponding to where the cleaner body 120 and wheel 130 collide. The shock absorbing member 123 may be made of rubber. Alternatively, the first rotation restriction member 146, which adjusts the rotation angle of the wheel 130, or the second rotation restriction member 147, which adjusts the rotation angle of the cleaner body 120, may be used to absorb the shock.

FIG. 6A is a cross-sectional view illustrating the operation of a rotation restriction member 146 disposed on a wheel 130. The first rotation restriction member 146 protrudes from a part of the first axis 141 and is formed opposite the wheel 130 on the first axis 141. When the wheel 130 turns, the second connection member 132 and the first rotation restriction member 146 may hit each other such that the rotation of the wheel 130 about the first axis 141 is restricted. Accordingly, the cleaner body 120 and the wheel 130 are prevented from colliding with each other.

FIG. 6B is a cross-sectional view illustrating the operation of a rotation restriction member 147 disposed on a cleaner body 120. The second rotation restriction member 147 protrudes from a part of the second axis 143 and is formed opposite the cleaner body 120 on the second axis 143. When the cleaner body 120 turns, the first connection member 122 and the second rotation restriction member 147 may hit each other such that the rotation of the cleaner body 130 about the second axis 143 is restricted. Accordingly, the cleaner body 120 and the wheel 130 are prevented from colliding with each other.

The first rotation restriction member 146 and second rotation restriction member 147, as described above, are merely exemplary embodiments of the present invention, and various structures may be employed to prevent the wheel 130 and cleaner body 120 from colliding with each other.

According to a wheel connection apparatus 140 and a vacuum cleaner 100 of the present invention, a cleaner body 120 is capable of rotating about its original position at a predetermined angle without the wheels 130 rotating about their own axis, i.e., rolling, or dragging so that the cleaner body moves more freely. Accordingly, when a user changes the direction of movement of the cleaner body, the cleaner body moves more smoothly and with less force.

While certain exemplary embodiments of the present invention have been shown and described with reference to certain preferred embodiments thereof, it will be understood by those skilled in the art that various changes in form and details may be made therein without departing from the spirit and scope of the invention as defined by the appended claims and their equivalents.

## Claims

1. A wheel connection apparatus, comprising:
a first axis rotatably connected to a wheel;
a second axis rotatably connected to a cleaner body; and
a frame that supports the first axis and the second axis and prevents the first axis and the second axis from becoming separated from the cleaner body and the wheel, the first axis and the second axis being arranged at a predetermined distance from each other.

2. The wheel connection apparatus of claim 1, wherein the frame comprises a protrusion that prevents the first axis and the second axis from becoming separated from the cleaner body and the wheel.

3. The wheel connection apparatus of any of claims 1 and 2, further comprising a first rotation restriction member disposed on a side of the wheel that restricts the angle of rotation of the wheel.

4. The wheel connection apparatus of claim 3, wherein the first rotation restriction member protrudes from a part of the first axis.

5. The wheel connection apparatus of any of claims 1 to 4, further comprising a second rotation restriction member disposed on a side of the cleaner body that restricts the angle of rotation of the cleaner body.

6. The wheel connection apparatus of Claim 5, wherein the second rotation restriction member protrudes from a part of the second axis.

7. A cleaner, comprising:
a cleaner body;
a plurality of wheels that enable the cleaner body to move; and
a plurality of wheel connection apparatuses that connect each respective wheel to the cleaner body,
wherein each of the plurality of wheel connection apparatuses includes,
a first axis rotatably connected to the respective wheels;
a second axis rotatably connected to the cleaner body; and
a frame that supports the first axis and the second axis and prevents the first axis and the second axis from becoming separated from the cleaner body and the wheel, the first axis and second axis being arranged at a predetermined distance from each other.

8. The cleaner of claim 7, wherein the cleaner body turns about the wheel at a predetermined angle without the wheel rotating about its own axis.

9. The cleaner of any of claims 7 and 8, wherein a protrusion is formed on the frame to prevent the first axis and the second axis from becoming separated.

10. The cleaner of any of claims 7 to 9, wherein the wheel connection apparatus further comprises a first rotation restriction member disposed on a side of the wheel that restricts the angle of rotation of the wheel.

11. The cleaner of claim 10, wherein the first rotation restriction member protrudes from a part of the first axis.

12. The cleaner of any of claims 7 to 11, wherein the wheel connection apparatus further comprises a second rotation restriction member disposed on a side of the cleaner body that restricts the angle of rotation of the cleaner body.

13. The cleaner of claim 12, wherein the second rotation restriction member protrudes from a part of the second axis.

14. The cleaner of any of claims 7 to 13, wherein a shock absorbing member is formed on a part of the cleaner body opposite the wheel.

15. The cleaner of claim 14, wherein the shock absorbing member is made of rubber.
